# EUROPÄISCHE PATENTSCHRIFT

(11) **EP 2 168 020 B1**
(45) Veröffentlichungstag und Bekanntmachung des Hinweises auf die Patenterteilung: **13.02.2013**
(21) Anmeldenummer: 08761330.3
(22) Anmeldetag: 24.06.2008
(51) Int. Cl.: G05D 1/02

(54) **SYSTEM UND VERFAHREN ZUR STÜTZUNG EINER LÄNGSFÜHRUNG EINES FAHRZEUGS**
SYSTEM AND METHOD FOR ASSISTING LONGITUDINAL GUIDANCE OF A VEHICLE
SYSTÈME ET PROCÉDÉ D'ASSISTANCE D'UN GUIDAGE LONGITUDINAL D'UN VÉHICULE

(30) Priorität: 02.07.2007 DE 102007030731
(43) Veröffentlichungstag der Anmeldung: 31.03.2010
(73) Patentinhaber: Robert Bosch GmbH, 70442 Stuttgart (DE)
(72) Erfinder: LUTHER, Marc, 31228 Peine (DE); NIEHSEN, Wolfgang, 31162 Bad Salzdetfurth (DE); LAUER, Paul-Sebastian, 30171 Hannover (DE)
(86) Internationale Anmeldenummer: PCT/EP2008/058015
(87) Internationale Veröffentlichungsnummer: WO 2009/003876

(56) Entgegenhaltungen:
- DE-A1- 3 538 908

## Beschreibung

### Stand der Technik

Die Erfindung betrifft ein System und ein Verfahren zur Stützung der Längsführung eines Fahrzeugs mittels eines Navigations- und Ortungssystems. Derartige Längsführungen sollen gewährleisten, dass Fahrzeuge nicht nur automatisch ihre globale Position beispielsweise mit Hilfe des Navigations- und Ortungssystems erkennen und dem Fahrzeugführer visuell und/oder akustisch vermitteln, sondern auch eine automatische Längsführung des Fahrzeugs ermöglichen, so dass der Fahrzeugführer in Zukunft lediglich das Ziel eingeben muss und das Fahrzeug ihn sicher mittels einer automatisch arbeitenden Quer- und Längsführungseinrichtung ans Ziel bringt.

Eine derartige Quer- und Längsführung setzt voraus, dass beispielsweise auf Talstraßen oder in Tunnelabschnitten, auf bzw. in denen eine Satellitennavigation nicht gewährleistet ist, eine sichere Längsführung und/oder Querführung des Fahrzeugs weiterhin unterstützt wird. Darüber hinaus ist es erforderlich eine Erfassung der unmittelbaren Umgebung mit der globalen Fahrzeuglängsführung zu korrelieren, um Unfällen vorzubeugen und eine sicher arbeitende automatische Längsführung zu gewährleisten.

Aus der Druckschrift FR 28 72 326 A1 ist ein Verfahren und ein System bekannt, das ein Bild oder einen Schall erfasst und Mittel zum Verarbeiten und Analysieren des Audio/Videovorgangs aufweist, wobei Mittel der Speicherung, der Visualisierung und der Steuerung mit den Mitteln zum Verarbeiten und Analysieren des Audio/Videovorgangs verbunden sind. Dabei werden die erfassten Audio/Videovorgänge klassifiziert und lösen einen Alarm aus, wenn eine alarmierende Situation erfasst wird.

Dieses System und Verfahren ist technisch aufwendig, da sowohl Bilderfassungseinrichtungen als auch Schallerfassungsmittel einzusetzen sind, um in einer Gefahrensituation einen Alarm auszulösen. Dieses bekannte System dient somit lediglich der Alarmierung eines Fahrzeugführers, nicht aber der Stützung einer automatischen Längsführung eines Fahrzeugs.

Aus der Druckschrift DE 198 002 02 ist ein Kraftfahrzeug bekannt, das mindestens mit einem Sicherheitsabstandsanzeigesystem ausgestattet ist, das auf Laser-, Ultraschall-, Infrarotsensoren oder einer Kombination dieser Sensoren basiert und bei Unterschreiten eines Mindestabstands einen Alarm auslösen soll. Abstandsmessungen allein charakterisieren nicht die Schallumgebung eines Fahrzeugs und können somit zur Längsführung eines Fahrzeugs nur bedingt beitragen.

Aus der Druckschrift FR 28 124 02 ist ein System unter Verwendung von akustischen Sensoren bekannt, das vorbei fahrende oder voraus fahrende oder nebenher fahrende Fahrzeuge detektiert. Derartige fahrende Fahrzeuge können nicht zur Präzisierung einer Ortsbestimmung eines Fahrzeugs beitragen, sondern lediglich vor anderen Verkehrsteilnehmern warnen.

Aus der Druckschrift GB 2 405 474 ist ein System zur Einparkhilfe von Fahrzeugen bekannt und weist in den Stoßstangen akustische, Ultraschall- oder elektromagnetische Sensoren auf, die hörbare oder sichtbare Alarmmittel auslösen, wenn sich das einparkende Fahrzeug zu nah einem abgestellten Fahrzeug nähert. Diese Einparkhilfe kann eine globale Positionierung nicht unterstützen.

Aus der Druckschrift WO 205 015 260 ist ein Verfahren und eine Vorrichtung bekannt, um Objekte zu erfassen, die sich nahezu in die gleiche Richtung wie ein Fahrzeug bewegen. Dabei sollen Fahrzeuge detektiert werden, die sich in einem toten Winkel zu dem erfassenden Fahrzeug befinden. Dazu werden Ultraschallsignale gemessen, die im toten Winkel erfasst und ausgewertet werden. Ein derartiges Verfahren bzw. eine derartige Vorrichtung können nur bedingt die Längsführung eines Fahrzeugs unterstützen und sind entwickelt worden, um einen Fahrzeugführer vor einer drohenden Situation zu alarmieren.

Aus der DE 35 38 908 A1 ist ein bordautonomes Ortungssystem zur Führung von roboter- und fahrerlosen Flurförderfahrzeugen bekannt, das mit mindestens einem Abstandssensor laufend die momentane Fahrbahnbreite und -länge ermittelt und die ermittelten Werte zur Ortsbestimmung mit digitalen Kartendaten vergleicht. Die Messung der Abstände erfolgt durch bordseitige Funk-, (Ultra-)Schall- oder Lasersender in Verbindung mit entsprechenden Detektoren für die Echosignale von den Fahrbahngrenzungen. Hierbei werden die Sender im Impuls- oder Dauerbetrieb moduliert und ein Laufzeitverfahren angewendet.

### Aufgabe der Erfindung

Aufgabe der Erfindung ist es, ein System und ein Verfahren anzugeben, womit eine Längsführung eines Fahrzeugs unterstützt wird.

### Lösung der Aufgabe

Diese Aufgabe wird mit dem Gegenstand der unabhängigen Ansprüche gelöst. Vorteilhafte Weiterbildungen der Erfindung ergeben sich aus den abhängigen Ansprüchen.

Erfindungsgemäß wird ein System und ein Verfahren zur Stützung einer Längsführung eines Fahrzeugs mittels eines Navigations- und Ortungssystems geschaffen. Dabei wirkt das Navigations- und Ortungssystem mit mindestens einer Schallsensoreneinrichtung und einer Schallauswerteeinheit zusammen. Die Schallsensoreneinrichtung erfasst eine Schallumgebung des Fahrzeugs und die Auswerteeinheit präzisiert die Positionsbestimmung des Fahrzeugs aus digitalisierten Schallumgebungsdaten und Daten mindestens einer digitalisierten Kartenvorlage eines Kartenspeichers des Navigations- und Ortungssystems.

### Vorteile und Wirkungsweise der Erfindung

Dabei wird in vorteilhafter Weise mindestens auf vorhandene digitalisierte Kartenvorlagen des Kartenspeichers des Navigations- und Ortungssystems zurückgegriffen. Um die Schallumgebung zu erfassen und zu klassifizieren stehen unterschiedliche Schallfrequenzbereiche zur Verfügung. Demgemäß werden vorzugsweise für den hörbaren Schallbereich akustische Schallsensoren eingesetzt, für den Infraschallbereich entsprechende Infraschallsensoren und für den Ultraschallbereich entsprechende Ultraschallsensoren vorgesehen. Die Erfassung des Infraschallbereichs ist insofern interessant, da er schlagartig auftretende Schallereignisse, wie das Überqueren von Eisenbahnschienen oder Straßenbahnschienen, eindeutig zuordnen kann. Der Ultraschallbereich ist interessant, wenn die Schallumgebung zusätzlich durch Ultraschallechos erfasst werden soll.

Einen breiten Anwendungsbereich zur Präzisierung der globalen Position bieten jedoch die akustischen Schallsensoren, mit denen Änderungen der Fahrgeräusche durch Brücken, Tunnelein- und Ausfahrten, Fahrbahnmarkierungen, Rattermarken oder Änderungen des befahrbaren Untergrunds sowie Änderungen durch Schallquellen der Schallumgebung erfasst und ausgewertet werden können. Auch das Echo des akustischen Eigenschalls des Fahrzeugs beim Annähern oder beim Vorbeifahren an Leitplanken, Begrenzungs-, Warn- oder Abstandsmarken, an Leitpfosten, Gebäuden, Tunnelwänden, Alleebäumen, Beleuchtungsmasten u.Ä. kann mit Hilfe akustischer Schallsensoren, die per Definition auf die hörbaren Frequenzen zwischen 22 Hertz und 20 Kilohertz begrenzt sind, erfasst und ausgewertet werden.

Mit der Erfassung der Schallumgebung ist dieses System nicht nur zur Stützung der Längsführung bei einer Fahrzeugnavigation einsetzbar, sondern auch für eine Querführung von Nutzen. Durch Erkennung baulicher Merkmale, die bereits in digitalen Karten erfasst sind, können insbesondere bei Brücken, Tunnelein- und Ausfahrten Unsicherheiten in der Längsortung verringert werden, indem bei erkannten Merkmalen der Schallumgebung die Längsposition des Fahrzeugs in Bezug auf die digitalisierten Kartendaten entsprechend korrigiert werden, was einem "map-matching" entspricht.

Durch Erkennung baulicher Merkmale in Situationen, in denen kein GPS-Signal des Navigations- und Ortungssystems verfügbar ist, wie beispielsweise in Tunneln, lassen sich bekannte bauliche Eigenschaften, die akustisch erfassbar sind, zur Fortführung der Eigenposition während der Navigation nutzen. Auch kann die Eigengeschwindigkeit beispielsweise durch ein akustisches Mitzählen von Tunnelsäulen oder Leit- und Begrenzungspfosten von bekanntem Abstand ermittelt werden. In Tunneln lassen sich auch Abzweigungen zur Positionspräzisierung verwenden.

In einer bevorzugten Ausführungsform der Erfindung weist die Schallsensoreneinrichtung mindestens ein Mikrofon mit Richtcharakteristik auf, wobei dieses Mikrofon Bereiche abdecken soll, die eine Verfolgung von Objekten ermöglicht, die sich außerhalb des Erfassungsbereichs anderer Schallsensoren der Schallsensoreneinrichtung befinden.

Weiterhin ist es vorgesehen, dass ein Schallsensor einen integrierten A/D-Wandler aufweist, so dass über Datenbusverbindungen der Schallsensor unmittelbar mit einer Signalverarbeitungseinrichtung und/oder der Schallauswerteeinheit verbunden werden kann. Darüber hinaus ist es von Vorteil, die Schallauswerteeinheit in das Navigations- und Ortungssystem zu integrieren, zumal der Speicher mit digitalisierten Kartenvorlagen im Navigations- und Ortungssystem bereits zur Verfügung steht und zur Stützung der Längsführung des Fahrzeugs bei Erfassung der Schallumgebung in die Schallauswertung mit einbezogen ist.

Weiterhin ist es vorgesehen, dass das System eine drahtlose Signalübertragungseinrichtung mit Signalsender und Signalempfänger aufweist. Dadurch wird es möglich, im Multiplexverfahren eine Vielzahl von Schallsensoren einer Schallsensoreneinrichtung mit der Schallauswerteeinheit über die Signalübertragungseinheit zu verbinden.

Ein Verfahren zur Stützung der Längsführung eines Fahrzeugs und in einem gewissen Grad auch zur Stützung der Querführung eines Fahrzeugs weist die nachfolgenden Verfahrensschritte auf. Zunächst wird die Schallumgebung eines Fahrzeugs mittels mindestens einer Schallsensoreneinrichtung erfasst und digitalisiert und einer Schallauswerteeinheit zugeführt. In der Schallauswerteeinheit wird die digitalisierte Schallumgebung mit Daten einer digitalisierten Kartenvorlage eines Kartenspeichers eines Navigations- und Ortungssystems verglichen. Anschließend werden die Vergleichsergebnisse zur Stützung der Längsführungseinrichtung und in begrenztem Umfang der Querführungseinrichtung des Fahrzeugs genutzt.

Mit einem derartigen Verfahren werden Änderungen der Fahrgeräusche durch Brücken, Tunnelein- und Ausfahrten, Straßenbahnschienen, Fahrbahnmarkierungen, Rattermarken oder durch den Fahrbahnuntergrund sowie Änderungen durch Schallquellen der Schallumgebung erfasst und ausgewertet. Auch kann bei einem derartigen Verfahren das Echo des Eigenschalls des Fahrzeugs beim Annähern oder beim Vorbeifahren an Leitplanken, Begrenzungs-, Bahn- oder Abstandsmarken, an Leitpfosten, Gebäuden, Tunnelwänden, Alleebäumen, Beleuchtungsmasten u.Ä. erfasst und ausgewertet werden.

Darüber hinaus ist es möglich, die Verwendung verschiedener Mikrofone für.unterschiedliche Anwendungen und Fahrzeugzustände einzusetzen. Dabei können auch Fahrzeugzustände wie Beschleunigung, Geschwindigkeit, Traktion der Räder durch entsprechende Körperschallmikrofone an den entsprechenden Fahrzeugkomponenten erfasst werden. Schließlich ist es auch von Vorteil, Schallfilter zur Erkennung spezifischer Signale mit einem verbesserten Rausch-/Nutzsignalverhältnis zu verwenden, um beispielsweise eine Klassifizierung anderer Verkehrsteilnehmer durch deren typische Geräuschentwicklung und Geräuschfrequenz vorzunehmen.

Die Erfindung wird nun anhand der beigefügten Figuren näher erläutert.

### Kurze Beschreibung der Figuren

Figur 1 zeigt ein schematisches Blockschaltbild eines Systems einer ersten Ausführungsform der Erfindung;
Figur 2 zeigt eine schematische Skizze einer Schallsensoreneinrichtung eines Systems gemäß einer zweiten Ausführungsform der Erfindung;
Figur 3 zeigt eine schematische Skizze einer Schallsensoreneinrichtung eines Systems gemäß einer dritten Ausführungsform der Erfindung;
Figur 4 zeigt ein schematisches Blockschaltbild eines Systems gemäß einer vierten Ausführungsform der Erfindung;
Figur 5 zeigt ein schematisches Blockschaltbild eines Systems gemäß einer fünften Ausführungsform der Erfindung.

### Ausführungsformen der Erfindung

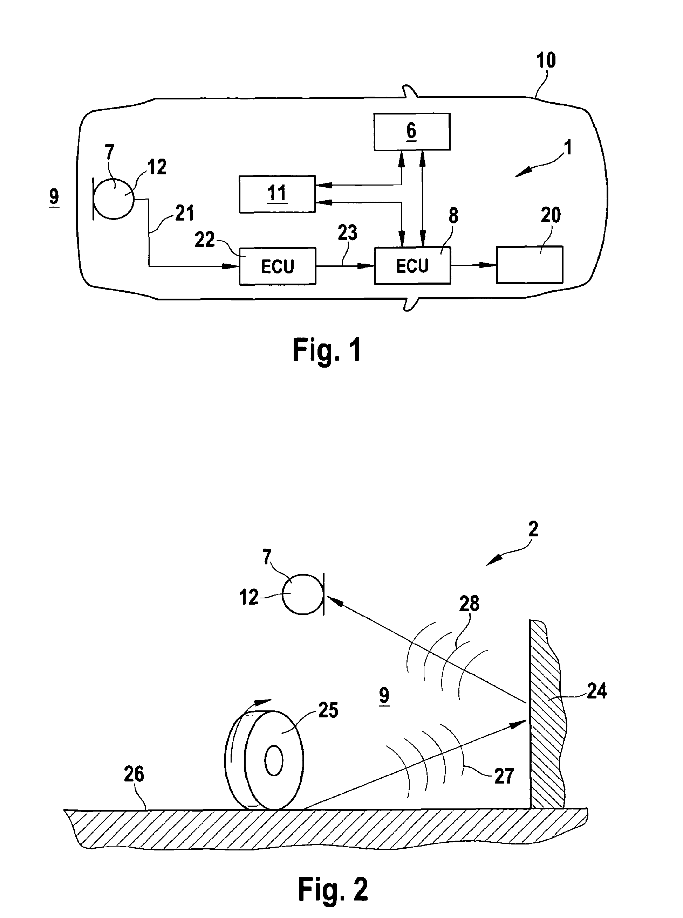

Figur 1 zeigt ein schematisches Blockschaltbild eines Systems 1 zur Stützung der Längsführung eines Fahrzeugs 10 mittels eines Navigations- und Ortungssystems 6 in Zusammenwirkung mit mindestens einer Schallsensoreneinrichtung 7 und einer Schallauswerteeinheit 8 unter Erfassung einer Schallumgebung 9 des Fahrzeugs 10. Dazu weist die erfindungsgemäße Ausführungsform mindestens einen akustischen Sensor 12 auf, der die von außen auf das Fahrzeug 10 treffenden Schallwellen im Bereich zwischen 22 Hz und 20 kHz aufnimmt und in elektrische Signale umsetzt, die auf einer analogen Datenleitung 21 einer Signalverarbeitungseinrichtung 22 zugeführt werden. In der Signalverarbeitungseinrichtung 22 werden die analogen Daten mit Hilfe eines D/A-Wandlers digitalisiert und können über entsprechende akustische Filter in Kategorien eingeteilt werden.

Eine Klassifizierung und Gewichtung dieser Daten kann dann in einer Schallauswerteeinheit 8, die mit der Signalverarbeitungseinrichtung 22 über einen Datenbus 23 verbunden ist, erfolgen. In der Schallauswerteeinheit 8 werden die digitalisierten und klassifizierten Schalldaten der Schallumgebung 9 des Fahrzeugs 10 mindestens mit digitalisierten Kartendaten eines Kartenspeichers 11 des Navigations- und Ortungssystems 6 korreliert. Insbesondere dann, wenn das Navigations- und Ortungssystem 6 keine Satellitenverbindung hat, erfolgt die Korrelation der Schallumgebung 9 nur mit den Kartendaten des Kartenspeichers 11 und wird einer Längsführungseinrichtung 20 des Fahrzeugs 10 zugeführt.

Das Klassifikationsergebnis der Schallauswerteeinheit 8 kann gegebenenfalls auch zusammen mit einem Gütemaß anderer elektronischer Komponenten, die Fahrzeugfunktionen realisieren, der Längsführungsausrichtung 20 zur Verfügung gestellt werden. Zumindest ist es möglich, dass in Zusammenwirken mit dem Navigations- und Ortungssystem 6 und der digitalisierten Schallumgebung 9 die globale Fahrzeugposition exakter bestimmt werden kann, als es mit sonstigen im Fahrzeug verfügbaren Sensoren beispielsweise zur Erfassung der Raddrehzahl, der Beschleunigung oder des GPS-Signals möglich ist.

Es ist damit eine deutlich genauere Fahrzeugnavigation sowohl in nicht urbanen als auch in urbanen Umgebungen möglich. Die Erkennung von Umweltzuständen wie Straßenzustand, Wetter, Verkehrsdichte und des Verhaltens anderer Verkehrsteilnehmer durch Brems- oder Aufprallgeräusche oder Warnsignale kann durch das in Figur 1 gezeigte Mikrofon als akustischer Sensor 12 von Nutzen sein. Ferner können die akustischen Signale benutzt werden, um die Querführung z.B. bei Überfahren von Fahrbahnmarkierungen bei Annäherung von baulichen Fahrbahnbegrenzungen usw. zu unterstützen.

Figur 2 zeigt eine schematische Skizze einer Schallsensoreneinrichtung 7 eines Systems 2 zur Stützung der Längsführung eines Fahrzeugs gemäß einer zweiten Ausführungsform der Erfindung. Bei dieser Ausführungsform der Erfindung werden die Fahrgeräusche eines Fahrzeugrads 25 auf der Fahrbahn 26 genutzt, um eine Fahrbahnbegrenzung 24, die beispielsweise eine Tunnelwand, ein Gebäude oder eine Leitplanke sein kann, welche die Fahrgeräusche 27 reflektiert, zu erfassen. Dabei wird das Echo 28 der Fahrgeräusche 27 durch den akustischen Sensor 12 in Form eines Mikrofons der Schallsensoreneinrichtung 7 des Fahrzeugs aufgenommen und ausgewertet.

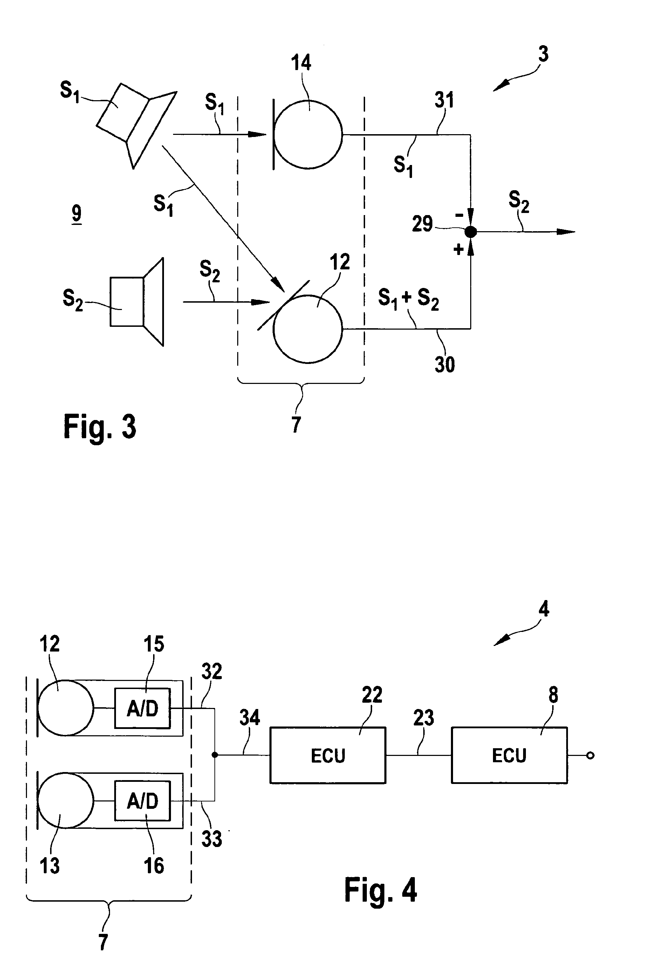

Figur 3 zeigt eine schematische Skizze einer Schallsensoreneinrichtung 7 eines Systems 3 zur Unterstützung der Längsführung eines Fahrzeugs, bei der mehrere Mikrofone 12 und 14 eingesetzt werden, um einen Schall einer Eigenschallquelle S₁ beispielsweise des Innenraums oder des Motors mit einem Mikrofon 14 mit Richtcharakteristik zu erfassen. Andererseits wird mit einem weiteren akustischen Sensor 12 der Schallsensoreneinrichtung 7 der Gesamtschall, der sowohl den Eigenschall der Schallquelle S₁ als auch den Fremdschall S₂ der Schallquellen der Schallumgebung 9 aufnimmt, erfasst. Das Schallsignal des Richtmikrofons 14 der Eigenschallquelle S₁ wird über eine Datenleitung 31 einem Verknüpfungspunkt 29 zugeführt. Das Gesamtschallsignal von S₁ und S₂ des akustischen Sensors 12 wird über eine weitere Datenleitung 30 ebenfalls dem Verknüpfungspunkt 29 zugeführt, an dem eine Subtraktion erfolgt, so dass für die weitere Signalverarbeitung nur noch das Signal des Fremdschalls S₂ der Schallumgebung 9 weitergegeben und weiterverarbeitet wird.

Figur 4 zeigt ein schematisches Blockschaltbild eines Systems 4 zur Stützung der Längsführung eines Fahrzeugs gemäß einer vierten Ausführungsform der Erfindung. Komponenten mit gleichen Funktionen wie in den vorhergehenden Figuren werden mit gleichen Bezugszeichen gekennzeichnet und nicht extra erörtert. Bei dieser Ausführungsform der Erfindung weist die Schallsensoreneinrichtung 7 einen akustischen Sensor 12 und einen Ultraschallsensor 13 auf, in denen bereits A/D-Wandler 15 bzw. 16 integriert sind, so dass die digitalisierten Schallsignale über die Datenbusse 32 bzw. 33 und den gemeinsamen Datenbus 34 der Signalverarbeitungseinrichtung 22 zugeführt werden können und nach einer Kategorisierung über den Datenbus 23 zur weiteren Klassifizierung in die Schallauswerteeinheit 8 eingespeist werden können.

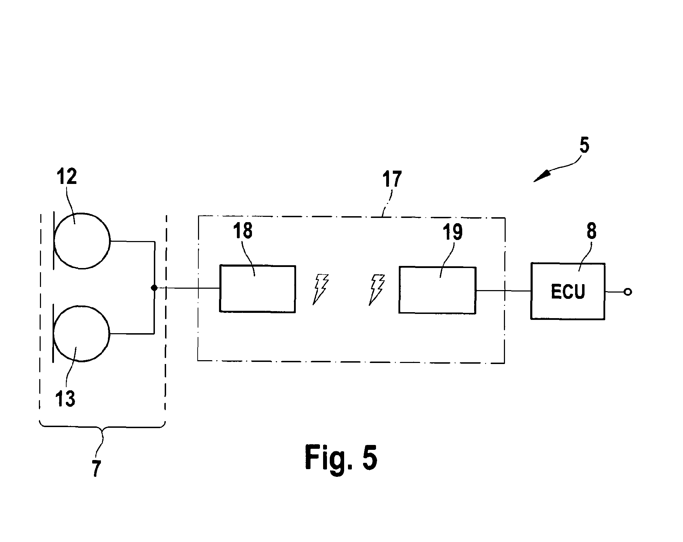

Figur 5 zeigt ein schematisches Blockschaltbild eines Systems 5 zur Stützung der Längsführung eines Fahrzeugs gemäß einer fünften Ausführungsform der Erfindung. Diese Ausführungsform der Erfindung unterscheidet sich von den vorhergehenden Ausführungsformen gemäß den Figuren 1 bis 4 dadurch, dass zur Übertragung der Daten eine drahtlose Signalübertragungseinrichtung 17 vorhanden ist, die von einer Vielzahl von Schallsensoren 12 bzw. 13 einer Schallsensoreneinrichtung 7 über einen Signalsender 18 beispielsweise per Multiplexverfahren übertragen werden und von einem Signalempfänger 19 aufgenommen und der Schallauswerteeinheit 8 zugeführt werden können.

In einer weiteren Ausführungsform können mehrere, vorzugsweise gleichartige Sensoren, wie z.B. akustische Sensoren, Ultraschallsensoren oder Infraschallsensoren verwendet werden, um eine Lokalisierung einer Schallquelle oder einer Reflexionsquelle vornehmen zu können. Auf diese Weise ist es möglich, dass die Schallsensoreinrichtung 7 auch die Lage und Position einer Reflexionsquelle wie z.B. einer Brücke, einem Tunnelein- oder eine Tunnelausfahrt bestimmen zu können. Die bestimmte Position der Reflexionsquelle kann zusätzlich dazu verwendet werden, um die Ortung des Fahrzeugs und damit die Führung des Fahrzeugs zu verbessern.

Beispielsweise kann als Reflexionsquelle eine Barke, ein Leitpfosten usw. und die Wahrnehmung von Fahrbahnlinien, Rattermarken und weiteren charakteristischen Fahrbahnuntergründen verwendet werden, um die Position des Fahrzeugs in Bezug auf eine Fahrzeugführung wie z.B. ein Navigationssystem und/oder ein Ortungssystem zu verbessern. Beispielsweise kann durch die Erkennung eines bestimmten Abstands zu einem bestimmten Bauwerk wie z.B. einer Barke, einem Leitpfosten, einer Brücke, einer Tunneleinfahrt oder einer Tunnelausfahrt und durch den Vergleich mit der Position des Bauwerks in der digitalen Karte die tatsächliche Position des Fahrzeugs korrigiert werden und ein sogenanntes Map-Matching durchgeführt werden. Dies kann insbesondere dazu verwendet werden, um in Situationen, in denen kein GPS-Signal verfügbar ist, wie z.B. in Tunneln mit Hilfe von akustischen Signalen, die Position des Fahrzeugs zu bestimmen und für die weitere Navigation zu nutzen. Zudem kommt beispielsweise die Eigengeschwindigkeit mittels eines akustischen Mitzählens von baulichen Merkmalen, wie z.B. Tunnelsäulen bekannter Breite, wobei die Daten über die Tunnelsäulen und deren Abstand in der digitalen Karte abgelegt sind, verwendet werden. Auch kann beispielsweise die Erkennung von Abzweigungen im Tunnel zur Positionsschätzung des Fahrzeugs verwendet werden.

## Patentansprüche

1. System zur Stützung einer Längsführung eines Fahrzeugs (10) mittels eines Navigations- und Ortungssystems (6) in Zusammenwirken mit mindestens einer Schallsensoreneinrichtung (7) und einer Schallauswerteeinheit (8) unter Erfassung einer Schallumgebung (9) des Fahrzeugs (10) und Präzisierung der Positionsbestimmung des Fahrzeugs (10) aus digitalisierten Schallumgebungsdaten und Daten mindestens einer digitalisierten Kartenvorlage (11),
**dadurch gekennzeichnet, dass**
Änderungen der Fahrgeräusche (27) und/oder das Echo des Eigenschalls des Fahrzeugs (10) ausgewertet werden.

2. System nach Anspruch 1,
**dadurch gekennzeichnet, dass**
die Schallsensoreneinrichtung (7) mindestens einen akustischen Schallsensor (12) für den hörbaren Schallbereich aufweist.

3. System nach Anspruch 1 oder Anspruch 2,
**dadurch gekennzeichnet, dass**
die Schallsensoreneinrichtung (7) mindestens einen Ultraschallsensor (13) für den Ultraschallbereich oder einen Infraschallsensor für den Infraschallbereich aufweist.

4. System nach einem der vorhergehenden Ansprüche,
**dadurch gekennzeichnet, dass**
die Schallsensoreneinrichtung (7) mindestens ein Mikrofon (14) mit Richtcharakteristik aufweist.

5. System nach einem der vorhergehenden Ansprüche,
**dadurch gekennzeichnet, dass**
der Schallsensor (12, 13) einen integrierten A/D-Wandler (15, 16) aufweist.

6. System nach einem der vorhergehenden Ansprüche,
**dadurch gekennzeichnet, dass**
die Schallauswerteeinheit (8) in das Navigations- und Ortungssystem (6) integriert ist.

7. System nach einem der vorhergehenden Ansprüche,
**dadurch gekennzeichnet, dass**
das System (5) eine drahtlose Signalübertragungseinrichtung (17) mit Signalsender (18) und Signalempfänger (19) aufweist.

8. Verfahren zur Stützung der Längsführung eines Fahrzeugs (10), das folgende Verfahrensschritte aufweist:
- Erfassen und Digitalisieren einer Schallumgebung (9) eines Fahrzeugs (10) mittels mindestens einer Schallsensoreneinrichtung (7) und einer Schallauswertereinheit (8),
wobei Änderungen der Fahrgeräusche (27) und/oder das Echo des Eigenschalls des Fahrzeugs (10) erfasst werden;
- Vergleichen der digitalisierten Schallumgebung (9) mit Daten einer digitalisierten Karte eines Kartenspeichers (11) eines Navigations- und Ortungssystems (6);
- Stützung der Längsführung des Fahrzeugs (10) unter Nutzung der Vergleichsergebnisse.

9. Verfahren nach Anspruch 8,
**dadurch gekennzeichnet, dass**
Änderungen der Fahrgeräusche (27) durch Brücken, Tunnelein- und Ausfahrten, Straßenbahnschienen, Fahrbahnmarkierungen, Rattermarken oder den Fahrbahnuntergrund erfasst und ausgewertet werden.

10. Verfahren nach Anspruch 8 oder Anspruch 9,
**dadurch gekennzeichnet, dass**
das Echo des Eigenschalls des Fahrzeugs (10) beim Annähern oder beim Vorbeifahren an Leitplanken, Begrenzungs-, Warn- oder Abstandsbaken, an Leitpfosten, Gebäuden, Tunnelwänden, Alleebäumen, Beleuchtungsmasten erfasst und ausgewertet wird.

11. Verfahren nach einem der Ansprüche 8 bis 10, **dadurch gekennzeichnet, dass** die örtliche Position des Fahrzeuges unter Berücksichtigung der digitalisierten Schallumgebung bestimmt oder korrigiert wird.

## Claims

1. System for assisting longitudinal guidance of a vehicle (10) by means of a navigation and locating system (6) through interaction with at least one sound sensor device (7) and a sound evaluation unit (8) by sensing a sound environment (9) of the vehicle (10) and precisely determining the position of the vehicle (10) from digitized sound environment data and data of at least one digitized map template (11),
**characterized in that**
changes in the driving noises (27) and/or the echo of the vehicle's (10) own noise are evaluated.

2. System according to Claim 1,
**characterized in that**
the sound sensor device (7) has at least an acoustic sound sensor (12) for the audible sound range.

3. System according to Claim 1 or Claim 2,
**characterized in that**
the sound sensor device (7) has at least one ultrasonic sensor (13) for the ultrasonic range or an infra-sound sensor for the infra-sound range.

4. System according to one of the preceding claims,
**characterized in that**
the sound sensor device (7) has at least one microphone (14) with a directional characteristic.

5. System according to one of the preceding claims,
**characterized in that**
the sound sensor (12, 13) has an integrated A/D converter (15, 16).

6. System according to one of the preceding claims,
**characterized in that**
the sound evaluation unit (8) is integrated into the navigation and locating system (6).

7. System according to one of the preceding claims, **characterized in that**
the system (5) has a wireless signal transmission device (17) with a signal transmitter (18) and signal receiver (19).

8. Method for assisting the longitudinal guidance of a vehicle (10), which has the following method steps:
- sensing and digitizing a sound environment (9) of a vehicle (10) by means of at least one sound sensor device (7) and a sound evaluation unit (8),
wherein changes in the driving noises (27) and/or the echo of the vehicle's (10) own sound are sensed;
- comparison of the digitized sound environment (9) with data of a digitized map of a map memory (11) of a navigation and locating system (6);
- assisting the longitudinal guidance of the vehicle (10) using the comparison results.

9. Method according to Claim 8,
**characterized in that**
changes in the driving noises (27) due to bridges, tunnel entries and tunnel exits, tram rails, carriageway markings, chatter marks or the underlying carriageway surface are sensed and evaluated.

10. Method according to Claim 8 or Claim 9,
**characterized in that**
the echo of the vehicle's (10) own sound when approaching or travelling past crash barriers, boundary beacons, warning beacons or distance beacons, reflector posts, buildings, tunnel walls, avenues of trees, lighting pillars is sensed and evaluated.

11. Method according to one of Claims 8 to 10, **characterized in that** the local position of the vehicle is determined or corrected by taking into account the digitized sound environment.

## Revendications

1. Système d'assistance d'un guidage longitudinal d'un véhicule (10) à l'aide d'un système de navigation et de localisation (6) interagissant avec au moins un dispositif de capteurs de son (7) et une unité d'analyse de son (8) détectant un environnement sonore (9) du véhicule (10) et précisant la détermination de position du véhicule (10) à partir des données d'environnement sonore numérisées et des données d'au moins un modèle cartographique (11), **caractérisé en ce que** les variations de bruit de conduite (27) et/ou l'écho du bruit propre au véhicule (10) sont analysées.

2. Système selon la revendication 1, **caractérisé en ce que** le dispositif de capteurs de son (7) comporte au moins un capteur de son (12) acoustique pour la plage sonore audible.

3. Système selon la revendication 1 ou 2, **caractérisé en ce que** le dispositif de capteurs de son (7) comporte au moins un capteur à ultrasons (13) pour la plage des ultrasons ou un capteur à infrasons pour la plage des infrasons.

4. Système selon l'une quelconque des revendications précédentes, **caractérisé en ce que** le dispositif de capteurs de son (7) comporte au moins un microphone (14) présentant des caractéristiques de redressement.

5. Système selon l'une quelconque des revendications précédentes, **caractérisé en ce que** le capteur de son (12, 13) comporte un convertisseur A/N (15, 16) intégré.

6. Système selon l'une quelconque des revendications précédentes, **caractérisé en ce que** l'unité d'analyse de son (8) est intégrée dans le système de navigation et de localisation (6).

7. Système selon l'une quelconque des revendications précédentes, **caractérisé en ce que** le système (5) comporte un dispositif de transmission de signaux (17) sans fil pourvu d'un émetteur de signaux (18) et d'un récepteur de signaux (19).

8. Procédé d'assistance du guidage longitudinal d'un véhicule (10), présentant les étapes de procédé suivantes :
- détection et numérisation d'un environnement sonore (9) d'un véhicule (10) à l'aide d'au moins un dispositif de capteurs de son (7) et d'une unité d'analyse de son (8) ;
les variations des bruits de conduite (27) et/ou l'écho du bruit propre du véhicule (10) étant détectés ;
- comparaison de l'environnement sonore (9) numérisé avec les données d'une carte numérisée stockées dans une mémoire de carte (11) d'un système de navigation et de localisation (6) ;
- assistance du guidage longitudinal du véhicule (10) en utilisant les résultats de la comparaison.

9. Procédé selon la revendication 8, **caractérisé en ce que** les variations des bruits de conduite (27) dues à la présence de ponts, d'entrées et de sorties de tunnel, de rails de tramway, de marquages au sol, de marques de vibration ou d'arrière-plan de conduite sur route sont détectées et analysées.

10. Procédé selon la revendication 8 ou 9, **caractérisé en ce que** l'écho du bruit propre du véhicule (10) lors de l'approche ou du dépassement de glissières de sécurité, de balises d'approche ou d'avertissement ou d'espacement, de balisages divers, de bâtiments, de parois de tunnel, d'allées d'arbres, de lampadaires est détecté et analysé.

11. Procédé selon l'une quelconque des revendications 8 à 10, **caractérisé en ce que** la position dans l'espace du véhicule est déterminée ou corrigée en tenant compte de l'environnement sonore numérisé.
